# EUROPÄISCHE PATENTSCHRIFT

(11) **EP 2 965 020 B1**
(45) Veröffentlichungstag und Bekanntmachung des Hinweises auf die Patenterteilung: **27.06.2018**
(21) Anmeldenummer: 14722322.6
(22) Anmeldetag: 07.03.2014
(51) Int. Cl.: F24F 12/00, F24F 5/00

(54) **ANLAGE ZUM KONDITIONIEREN DER LUFT IN EINEM GEBÄUDE**
SYSTEM FOR CONDITIONING THE AIR IN A BUILDING
INSTALLATION SERVANT À CONDITIONNER L'AIR DANS UN BÂTIMENT

(30) Priorität: 07.03.2013 CH 5752013
(43) Veröffentlichungstag der Anmeldung: 13.01.2016
(73) Patentinhaber: Zehnder Group International AG, 5722 Gränichen (CH)
(72) Erfinder: BAUMANN, Heinz, 8400 Winterthur (CH); DIETHELM, Roland, 8404 Winterthur (CH)
(74) Vertreter: Veni Swiss & European Patent Attorneys
(86) Internationale Anmeldenummer: PCT/IB2014/000271
(87) Internationale Veröffentlichungsnummer: WO 2014/135962

(56) Entgegenhaltungen:
- EP-A1- 1 710 514
- EP-A1- 1 734 317
- CH-A5- 599 510
- DE-A1- 10 058 273
- DE-A1-102007 041 041
- US-A- 6 070 423

## Beschreibung

Die Erfindung bezieht sich auf eine Anlage zum Konditionieren der Luft in einem Gebäude.

DE 100 58 273 offenbart eine Vorrichtung zur Lüftung von Gebäuden mit einem Wärmetauscher sowie einer Wärmepumpeneinheit zur Wärmerückgewinnung der in der Abluft vorhandenen Wärme auch dann vorgeschlagen, wenn eine Zulufterwärmung nicht oder nur in reduziertem Mass erwünscht ist. Dies wird gemäss DE 100 58 273 dadurch erreicht, dass ein zusätzlicher Brauchwasserspeicher vorgesehen wird, der mittels der Wärmepumpeneinheit heizbar ist.

Der Erfindung liegt die Aufgabe zugrunde, eine derartige Anlage derart weiterzubilden, dass sie zur Konditionierung der Luft sowie für die Bereitstellung von Brauchwasser/Warmwasser in dem Gebäude bei verschiedenen Witterungsverhältnissen flexibel einsetzbar ist.

Zur Lösung dieser Aufgabe stellt die Erfindung eine Anlage zum Konditionieren der Luft in einem Gebäude bereit, wobei die Anlage aufweist:
einen Luft/Luft-Wärmetauscher zum Austausch von Wärme zwischen aus dem Gebäude nach aussen abgeführter Luft und dem Gebäude von aussen zugeführter Luft;
eine Wärmepumpe ausserhalb des Gebäudes zum Austausch von Wärme zwischen einem Aussenmedium (Aussenluft, Grundwasser) und einem Wärmeträgermedium (Wasser; Glykol);
einen Luft/Medium-Wärmetauscher zum Austausch von Wärme zwischen der dem Gebäude zugeführten Luft und dem Wärmeträgermedium (Wasser, Glykol);
einen ersten Speicherbehälter zum Speichern eines ersten Teils des Wärmeträgermediums bei einer ersten Temperatur, vorzugsweise 45°C bis 55°C; einen zweiten Speicherbehälter zum Speichern eines zweiten Teils des Wärmeträgermediums bei einer zweiten Temperatur, vorzugsweise 5°C bis 40°C; wobei
die Wärmepumpe, der Luft/Medium-Wärmetauscher, der erste Speicherbehälter und der zweite Speicherbehälter alle über ein gemeinsames Leitungssystem miteinander verbunden sind und mit dem in dem Leitungssystem geführten Wärmeträgermedium energetisch gekoppelt sind.

Der Luft/Luft-Wärmetauscher ist ein Enthalpietauscher zum Austausch von Wärme und Wasserdampf zwischen aus dem Gebäude nach aussen abgeführter Luft und dem Gebäude von aussen zugeführter Luft.

Das Aussenmedium ist Aussenluft und/oder Grundwasser.

Der Luft/Medium-Wärmetauscher kann wahlweise zum Erwärmen oder zum Abkühlen der dem Gebäude zugeführten Luft betrieben werden.

Vorzugsweise ist das Wärmeträgermedium Wasser oder ein Wasser/Glykol-Gemisch.

Vorzugsweise ist dem Luft/Medium-Wärmetauscher eine Kondensat-Abflussleitung zum Abführen von Kondenswasser zugeordnet.

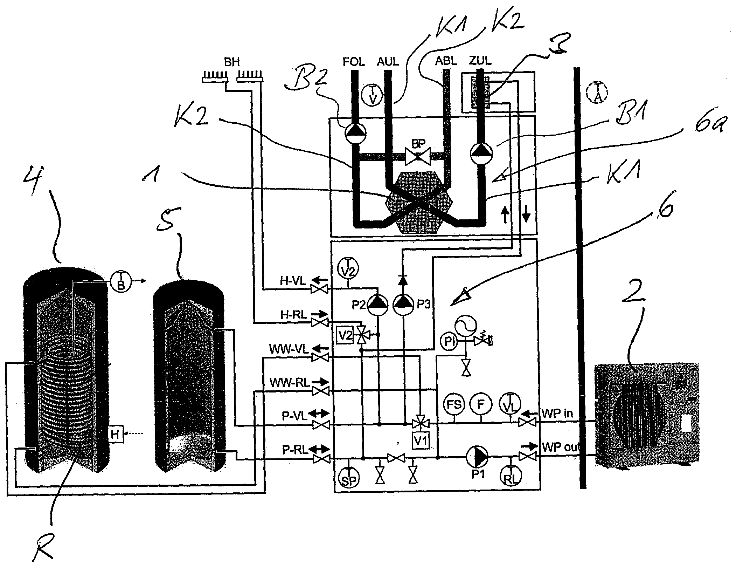

Weitere Vorteile, Merkmale und Anwendungsmöglichkeiten der Erfindung ergeben sich aus der nun folgenden Beschreibung einer beispielhaften Ausführung anhand der Figur.

### Aufbau

Die Anlage gemäss der Erfindung enthält eine aussen aufgestellte Luft/Wasser-Aussenwärmepumpe 2, eine innen aufgestellte ComfoBox 6a, 6 mit einem Luft/Luft-Wärmetauscher 1, einem Luft/Medium-Wärmetauscher 3 und einem Leitungssystem 6, sowie einen Pufferspeicher 5 und einen Warmwasser-Registerboiler 4. Die ComfoBox enthält einen Pneumatikbereich 6a mit einem Luft/Luft-Wärmetauscher 1 und einen Hydraulikbereich, der ein gemeinsames Leitungssystem 6 für ein Wärmeträgermedium (Wasser) bildet.

Die aussen aufgestellte Luft/Wasser-Wärmepumpe 2 ist als Kompaktgerät ausgeführt mit einem Axialventilator und einem eingebauten Wärmetauscher zur Abgabe der Wärme/Kälte an das Heizsystem. Die Luft/Wasser-Wärmepumpe 2 enthält einen Scroll-Verdichter. Dieser ist sauggas-gekühlt und drehzahlgeregelt über einen Inverter. Die Luft/Wasser-Wärmepumpe 2 enthält eine Kurbelwannenheizung, die für leichten Lauf sorgt. Die Luft/Wasser-Wärmepumpe 2 enthält einen direktgetriebenen Axialventilator aus Kunststoff, der ebenso drehzahlgeregelt, statisch und dynamisch ausgewuchtet und mit einem Berührungsschutzgitter versehen ist. Die Luft/Wasser-Wärmepumpe 2 enthält einen wettergeschützten Antriebsmotor, der wartungsfrei ist und mit thermischem Überlastungsschutz ausgerüstet ist.

Die innen aufgestellte ComfoBox 6a, 6 enthält einen Pneumatikbereich 6a und einen Hydraulikbereich 6.

Der Pneumatikbereich 6a enthält einen Luft/Luft-Wärmetauscher 1, eine ersten Luftkanal K1, der von einem Aussenluft-Anschluss AUL zu einem Zuluft-Anschluss ZUL verläuft, sowie einen zweiten Luftkanal K2, der von einem Abluft-Anschluss ABL zu einem Fortluft-Anschluss FOL verläuft. Der erste Luftkanal K1 und der zweite Luftkanal K2 kreuzen einander in dem Luft-Luft-Wärmetauscher 1. In diesem Kreuzungsbereich sind die beiden Luftkanäle K1 und K2 jeweils in eine Vielzahl kleiner Luftkanäle aufgefächert (nicht gezeigt; die Figur zeigt den Kreuzungsbereich nur schematisch ohne Auffächerung). In dem Luftkanal K1 ist stromab von dem Luft/Luft-Wärmetauscher 1 ein Gebläse B1 angeordnet. In dem Luftkanal K2 ist stromab von dem Luft/Luft-Wärmetauscher 1 ein Gebläse B2 angeordnet. Darüberhinaus enthält der Pneumatikbereich 6a eine wahlweise geöffnete oder geschlossene Umgehungs-Leitung BP, die von einem Punkt im Luftkanal K1 stromauf von dem Luft/Luft-Wärmetauscher 1 zu einem Punkt im Luftkanal K1 stromab von dem Luft/Luft-Wärmetauscher 1 verläuft.

Der durch ein gemeinsames Leitungssystem 6 gebildete Hydraulikbereich 6 dient als Heiz-/Kühlkreis, für Warmwasser und für die Entfeuchtung von Zuluft im Kanal K1, mit Sicherheitsventil und Expansionsgefäss. Der Pneumatikbereich 6a enthält einen Luft/Luft-Wärmetauscher 1, der als Enthalpietauscher ausgebildet ist. Dieser ermöglicht den Austausch von sensibler und latenter Wärme bzw. den Transport von Wärme und Wasserdampf über Membranbereiche zwischen dem ersten Luftkanal K1 und dem zweiten Luftkanal K2. Direkt darüber im Bereich des Zuluft-Anschlusses ZUL ist der Luft/Medium-Wärmetauscher 3 angeordnet, der Entfeuchtung der Zuluft dient.

Im unteren Gehäuseteil ist neben dem Hydraulikbereich 6 auch ein Elektrikbereich mit Regler und Schnittstellen-Box für die Luft/Wasser-Aussenwärmepumpe 2 untergebracht. In dem Hydraulikbereich 6 sind drei Pumpen P1, P2 und P3 angeordnet. Die Pumpe P1 dient zum Transport von Wärmeträgermedium (Wasser) durch die Aussenwärmepumpe 2 hindurch. Die Pumpe P2 dient zum Transport von Wärmeträgermedium (Wasser) durch den Heiz/Kühlkreis BH hindurch. Die Pumpe P3 dient zum Transport von Wärmeträgermedium (Wasser) durch den Luft/Medium-Wärmetauscher 3 hindurch.

Das Gerät ist wartungsfrei und gut zugänglich in Modulbauweise ausgeführt. Auf der linken Gehäuseseite befinden sind alle hydraulischen Anschlüsse zum Pufferspeicher 5, zum Warmwasser-Registerboiler 4 und zum Heiz/Kühlkreis. Auf der rechten Seite befinden sich die hydraulischen Verbindungen zur aussen aufgestellten Luft/Wasser-Wärmepumpe 2.

Im Pufferspeicher-Vorlauf P-VL und im Pufferspeicher-Rücklauf P-RL ist jeweils ein Ventil angeordnet.
Im Warmwasser-Registerboiler-Vorlauf WW-VL und im Warmwasser-Registerboiler-Rücklauf WW-RL ist ebenfalls jeweils ein Ventil angeordnet.
Im Heiz/Kühlkreis-Vorlauf H-VL und im Heiz/Kühlkreis-Rücklauf H-RL ist ebenfalls jeweils ein Ventil angeordnet. Der Heiz/Kühlkreis kann eine Fussbodenheizung BH sein.
Im ComfoBox-Einlass WPin von der Aussenwärmepumpe 2 und im ComfoBox-Auslass WPout zu der Aussenwärmepumpe 2 ist ebenfalls jeweils ein Ventil angeordnet.

Der Pufferspeicher 5 nimmt die von der Aussenwärmepumpe 2 erzeugte Wärme/Kälte auf und sorgt für einen ausgeglichenen Betrieb. Im Winter ist der Pufferspeicher 5 warm, im Sommer kalt (Minimum 6°C), entsprechend der eingestellten Heiz- bzw. Kühlkurve. Für das periodische Abtauen der Aussenwärmepumpe 2 im Winter liefert der Pufferspeicher 5 die notwendige Energie.

Der Warmwasser-Registerboiler 4 mit dem Register R speichert das Warmwasser. Ein Elektroheizeinsatz H dient der periodischen Nachheizung des Warmwassers auf 60°, um die Bildung von Legionellen zu verhindern.

### Funktionen

### Heizung/Kühlung

Die in der Aussenwärmepumpe 2 erzeugte Wärme/Kälte wird über einen Wärmetauscher ans Heizsystem abgegeben. In der ComfoBox 6a, 6 erfolgt die entsprechende Umschaltung und Verteilung an die einzelnen Abnehmer.

Die Verteilung der Wärme/Kälte im Haus erfolgt über eine Flächenheizung, wie zum Beispiel eine Fussboden- oder Wandheizung BH oder über Heizkörper (nicht gezeigt), welche die Wärme auch in Form von komfortabler Wärmestrahlung an den Raum abgeben.

### Lüftung

In der ComfoBox 6a, 6 ist ein Komfortlüftungsgerät, vorzugsweise mit Enthalpietauscher, mit einer maximalen Luftmenge von 550 m³/h integriert. Es verfügt über einen Luft/Luft-Wärmetauscher 1 in Form eines Kreuz-Gegenstrom-Enthalpietauschers, der Wärme und Feuchtigkeit mit einem Wirkungsgrad von rund 90% austauscht, energie-effiziente EC-Lüfter (Gebläse) B1, B2 und einen automatisch schaltenden Bypass BP.

Die Luftmenge der drei wählbaren Stufen kann an einem Bediengerät stufenlos eingestellt werden. Die Zuluft- und Abluftventilatoren, d.h. das Gebläse B1 bzw. das Gebläse B2, werden einzeln angesteuert, so dass das Haus perfekt einreguliert werden kann. In dem Komfortlüftungsgerät sind grossflächige Filter integriert. Der Bypass BL im Komfortlüftungsgerät ermöglicht die Umgehung des Luft/Luft-Wärmetauschers 1 bei speziellen Bedingungen in Übergangszeiten.

### Zuluftkühlung / Zuluftentfeuchtung

Die Funktion Zuluftkühlung / Zuluftentfeuchtung ist speziell in Gebieten mit heissen und feuchten Sommern interessant. Der durch den Luft/Medium-Wärmetauscher 3 gebildete Zuluftkühler ist direkt auf dem Zuluftstrom des Komfortlüftungsgeräts platziert. Dieser Zuluftkühler wird über eine separate Pumpe P3 mit kaltem Wasser aus dem Pufferspeicher 5 gespiesen. Ein Teil der Feuchtigkeit wird der Aussenluft AUL bereits im Enthalpietauscher 1 entzogen und auf die Abluft ABL übertragen, die dann als Fortluft FOL nach aussen abgegeben wird. Anschliessend durchströmt dieser Luftstrom, der jetzt Zuluft ZUL genannt wird, den als Luft/Medium-Wärmetauscher 3 ausgebildeten Zuluftkühler /-entfeuchter, wo die Luft noch weiter abgekühlt und weitere Feuchtigkeit auskondensiert wird. Im Winter wir die Zuluft entsprechend aufgewärmt und angefeuchtet.

### Warmwassererzeugung

Die Anlage enthält einen Registerboiler 4, z.B. mit 300 Liter Wasserinhalt, der mit der Aussenwärmepumpe 2 bei minimalem Strombedarf oder mittels des Elektro-Heizeinsatzes H bis 53°C erwärmt wird. Der integrierte Elektro-Heizeinsatz H, z.B. mit 2kW Leistung, verhindert durch regelmässiges Nachheizen des Wassers bis 60°C (standardmässig einmal wöchentlich) die Bildung von Legionellen und dient im Störungsfall als Notheizung für das Warmwasser. Optional kann ein grösserer Registerboiler 4 gewählt werden.

## Patentansprüche

1. Anlage zum Konditionieren der Luft in einem Gebäude, wobei die Anlage aufweist:
einen Luft/Luft-Wärmetauscher (1) zum Austausch von Wärme zwischen aus dem Gebäude nach aussen abgeführter Luft und dem Gebäude von aussen zugeführter Luft;
eine Wärmepumpe (2) ausserhalb des Gebäudes zum Austausch von Wärme zwischen einem Aussenmedium und einem Wärmeträgermedium;
einen Luft/Medium-Wärmetauscher (3) zum Austausch von Wärme zwischen der dem Gebäude zugeführten Luft und dem Wärmeträgermedium;
einen ersten Speicherbehälter (4) zum Speichern eines ersten Teils des Wärmeträgermediums bei einer ersten Temperatur;
einen zweiten Speicherbehälter (5) zum Speichern eines zweiten Teils des Wärmeträgermediums bei einer zweiten Temperatur; wobei
die Wärmepumpe, der Luft/Medium-Wärmetauscher, der erste Speicherbehälter und der zweite Speicherbehälter alle über ein gemeinsames Leitungssystem (6) miteinander verbunden sind und mit dem in dem Leitungssystem (6) geführten Wärmeträgermedium energetisch gekoppelt sind,
**dadurch gekennzeichnet,**
**dass** der Luft/Luft-Wärmetauscher (1) ein Enthalpietauscher zum Austausch von Wärme und Wasserdampf zwischen aus dem Gebäude nach aussen abgeführter Luft und dem Gebäude von aussen zugeführter Luft ist; und
**dass** das Aussenmedium zum Austausch von Wärme in der Wärmepumpe (2) Aussenluft und/oder Grundwasser ist; und
wobei der Luft/Medium-Wärmetauscher (3) wahlweise zum Erwärmen oder zum Abkühlen der dem Gebäude zugeführten Luft betrieben werden kann.

2. Anlage nach Anspruch 1, **dadurch gekennzeichnet, dass** das Wärmeträgermedium Wasser oder ein Wasser/Glykol-Gemisch ist.

3. Anlage nach Anspruch 1 oder 2, **dadurch gekennzeichnet, dass** dem Luft/Medium-Wärmetauscher eine Kondensat-Abflussleitung zum Abführen von Kondenswasser zugeordnet ist.

## Claims

1. A system for conditioning the air in a building, wherein the system includes:
an air/air heat exchanger (1) for exchanging heat between the air discharged out of the building and the air supplied to the building from outside;
a heat pump (2) outside of the building for exchanging heat between an outside medium and a heat carrier medium;
an air/medium heat exchanger (3) for exchanging heat between the air supplied to the building and the heat carrier medium;
a first storage container (4) for storing a first part of the heat carrier medium at a first temperature;
a second storage container (5) for storing a second part of the heat carrier medium at a second temperature; wherein
the heat pump, the air/medium heat exchanger, the first storage container, and the second storage container are all connected to one another via a common line system (6) and are energetically coupled to the heat carrier medium conducted in the line system (6),
**characterised in that** the air/air heat exchanger (1) is an enthalpy exchanger for exchanging heat and water vapour between the air discharged out of the building and the air supplied to the building from the outside; and
the outside medium for exchanging heat in the heat pump (2) is outside air and/or groundwater; and
wherein the air/medium heat exchanger (3) can be selectively operated for heating or for cooling the air supplied to the building.

2. The system according to claim 1, **characterised in that** the heat carrier medium is water or a water/glycol mixture.

3. The system according to claim 1 or 2, **characterised in that** a condensate discharge line for discharging condensation water is arranged for the air/medium heat exchanger.

## Revendications

1. Une installation servant à conditionner l'air dans un bâtiment, dans laquelle l'installation contient :
un échangeur de chaleur air/air (1) pour échanger de la chaleur entre l'air évacué du bâtiment vers l'extérieur et l'air amené depuis l'extérieur dans le bâtiment ;
une pompe à chaleur (2) en dehors du bâtiment pour échanger de la chaleur entre un agent extérieur et un agent caloporteur ;
un échangeur de chaleur air/agent (3) pour échanger de la chaleur entre l'air amené dans le bâtiment et l'agent caloporteur ;
un premier réservoir de stockage (4) pour stocker une première partie de l'agent caloporteur à une première température ;
un deuxième réservoir de stockage (5) pour stocker une deuxième partie de l'agent caloporteur à une deuxième température ; dans laquelle
la pompe à chaleur, l'échangeur de chaleur air/agent, le premier réservoir de stockage et le deuxième réservoir de stockage sont reliés entre eux par l'intermédiaire d'un système commun de conduite (6) et sont couplés énergétiquement à l'agent caloporteur circulé dans le système de conduite (6),
**caractérisée en ce que** l'échangeur de chaleur air/air est un échangeur enthalpique pour échanger de la chaleur et de la vapeur d'eau entre l'air évacué du bâtiment vers l'extérieur et l'air amené depuis l'extérieur dans le bâtiment ; et
l'agent extérieur pour échanger de la chaleur dans la pompe à chaleur est de l'air extérieur et/ou de l'eau souterraine ; et
l'échangeur de chaleur air/agent peut être utilisé pour le chauffage ou le refroidissement de l'air amené dans le bâtiment.

2. L'installation selon la revendication 1, **caractérisée en ce que** l'agent caloporteur est de l'eau ou un mélange eau/glycol.

3. L'installation selon la revendication 1 ou 2, **caractérisée en ce qu'**une ligne d'évacuation des condensats pour l'évacuation de la condensation est attribuée à l'échangeur de chaleur air/agent.
